# EUROPEAN PATENT SPECIFICATION

(11) **EP 4 643 408 B1**
(45) Date of publication and mention of the grant of the patent: **22.04.2026**
(21) Application number: 24709694.4
(22) Date of filing: 05.03.2024
(51) Int. Cl.: H01M 10/613, H01M 50/242, H01M 10/6567, H01M 10/6568, H01M 10/625, H01M 10/643, H01M 50/224, H01M 50/249, H01M 50/276, H01M 50/278, H01M 50/291, H01M 50/293

(54) **BATTERY MODULE WITH THERMAL EXPANSION COMPENSATION**
BATTERIEMODUL MIT THERMISCHER AUSDEHNUNGSKOMPENSATION
MODULE DE BATTERIE AVEC COMPENSATION DE DILATATION THERMIQUE

(43) Date of publication of application: 05.11.2025
(73) Proprietor: Whitemark Technology GmbH, 86972 Altenstadt (DE)
(72) Inventor: MEYER, Stefan Andreas, 6012 Wellington (NZ)
(74) Representative: Grünecker Patent- und Rechtsanwälte PartG mbB
(86) International application number: PCT/EP2024/055644
(87) International publication number: WO 2025/185804

(56) References cited:
- EP-A1- 4 117 089
- CN-A- 116 742 239
- DE-A1- 102015 200 700
- JP-A- H0 237 663

## Description

The present invention relates to a battery module allowing for efficient and homogeneous tempering of battery cells with compensation of a thermal expansion of a tempering fluid or liquid.

In view of the prospective limited availability of classical fuels and the increasing level of air pollution due to engine exhaust gases, focus has been laid on alternative drive solutions in recent years. Irrespective of the primary energy source, most approaches require battery modules and systems with a high power density, a long lifetime and high performance.

Building a battery system is the mechanical, electrical and thermal integration of a large number of battery cells into a working unit. Further aspects to consider are chemical compatibility of the used components, safety features in case of a thermal runaway and ease of mass production.

Adequate temperature control of each battery cell within a battery system is a key requirement, in particular, when charging or discharging the battery. Failure to adhere to temperature limits of, for instance, lithium-ion battery cells may lead to gradual deterioration of the battery performance or even to a rapid and dangerous destruction of the battery.

Conventionally, controlling the temperature of battery cells in a battery system may be performed indirectly, for instance, by providing a cooling body in thermal contact with base portions of cylindrical battery cells. A flow of a tempering fluid is established through channels included in the cooling body. In this way, heat generated by the battery cell is transferred via its shell into the cooling body. This setup exhibits a low thermal conductivity, leading to large temperature gradients which in turn cause accelerated aging a limit lifetime.

Alternatively, the battery cells may be cooled directly via a tempering fluid in direct thermal contact with them. For this purpose, a liquid-tight housing may be provided around the cells. By pumping the tempering fluid through said housing, heat, which is mainly transmitted through the poles of the battery cells, is transferred into the tempering fluid. This technique is known as immersion cooling and is an emerging technology still fraughted with many teething problems. One such problem is the huge amount and unreliability of seals needed in immersion cooled systems where the liquid-tight housing is generated around each cell individually (e.g. WO 2017/067923 A1).

In more reliable systems, the battery cells are entirely immersed in a tempering fluid, thereby reducing the number and sophistication of seals necessary.

However all immersion systems have to deal with the problem, that a change in temperature of the incompressible tempering liquid is always accompanied by a change in its volume, which will break the liquid-tight housing and therefor the battery module as a whole if not accounted for.

It is thus desirable that this volume change is accounted for in any immersion cooled battery module. For this purpose, the battery module may be partially filled with a compressible gas, rather than being entirely filled by the incompressible tempering fluid (liquid). This allows the tempering fluid to expand with increasing temperature while at the same time the gas included in the battery module is compressed.

However, when the battery module is not entirely filled with a tempering fluid (liquid), there may be disadvantages such as a worsened tempering of battery cells within the battery module, since not all battery cells may be entirely immersed into the tempering fluid. Further, a battery module filled with a tempering fluid and, to some percentage, by a compressible gas, might not be used in an arbitrary mounting position. This may be of particular disadvantage when the battery module is to be used in a moving system like an electric vehicle, electric car, an electric airplane, or the like.

It is thus desirable that a battery module be provided, in which a potential pressure change is accounted for without the requirement to include a certain amount of compressible gas within the battery module.

DE 102011 103 998 A1 describes a battery module with several battery cells located in a housing. In addition, there is a balloon as a pressure equalization element provided either inside or outside the housing, which allows the volume of the medium in the housing to expand due to a change in temperature.

DE 10 2015 200 700 A1 describes a battery module in which several high-temperature battery cells are surrounded by a temperature control medium. In order to allow the temperature control medium to expand without a significant change in pressure, receiving chambers with variable volumes formed by a membrane bellows or an expansion cell are provided.

CN 116 742 239 A discloses a battery module according to the preamble of claim 1, and describes a battery compartment including a deformable flat elastic membrane covering an opening of the compartment in order to compensate for a pressure difference between an inside and an outside of the compartment.

However, the solutions of said documents exhibit certain drawbacks. In particular, the production of a bellow is quite complex and costly. Further, a balloon does not exhibit a well defined shape and, further, by expanding the balloon, the pressure within a battery module may still increase significantly.

In view of the foregoing, it would be desirable to provide an improved immersion cooled battery module allowing for an efficient compensation of the tempering fluid without the aforementioned drawbacks.

This is achieved by the features of the independent claims. The dependent claims describe advantageous embodiments.

The present invention is defined as a battery module according to claim 1, comprising a housing, wherein at least one opening is provided, forming a fluid connection between an inside of the housing and an outside of the housing. The battery module further comprises a plurality of battery cells arranged in the housing and a tempering fluid included in the housing. A flexible plate is arranged on an outside surface of the housing and liquid-tightly covering the at least one opening, wherein the flexible plate is formed of a flexible material allowing for the tempering fluid to expand into a first space between the outside surface and the flexible plate, and the flexible plate exhibits, in an unstressed state, a corrugated shape.

In other words, the battery module comprises multiple battery cells within a housing. The housing exhibits at least one opening or a hole, which serves as a passage through which a tempering fluid included in the housing may flow to an outside of the housing. Said at least one opening is covered by the flexible plate. That is, the tempering fluid is enclosed in the space within the housing and between the housing and the flexible plate. The housing may exhibit two or more openings connecting the space within the housing and the space formed between the housing and the flexible plate. For example, the tempering fluid may be a liquid that occupies the space within the housing and the space between the housing and the flexible plate (except for the space occupied by other components of the battery module like the battery cells). In other words, there is no or substantially no gas included in the housing or between the housing and the flexible plate. The housing and the flexible plate may define a liquid-tight inner space of the battery module.

Since there is no or substantially no gas included in the battery module, temperature control of the battery cells may be performed independently of the orientation of the battery module or any forces applied to the battery module due to, for instance, movements or accelerations of the battery module when installed in a vehicle or another moving structure.

The flexible plate, due to its corrugated shape in an unstressed state, may deform and/or evert when a force is applied to the flexible plate. An unstressed state of the flexible plate refers to a state where no or no substantial external force is applied to the flexible plate. A force applied to the plate may be due to a change of the volume occupied by the tempering fluid caused by a change in temperature. That is, by eversion of the flexible plate, the volume of the inner space of the battery module may change. Thereby, an increase in pressure within the battery module may be minimized or prevented. That is, the flexible plate allows for compensation of a thermal expansion of a tempering fluid included in the battery module.

In particular, due to the corrugated shape of the flexile plate, the volume within the battery module may change without a substantial increase in pressure within the battery module, since the flexible plate is not required to be stretched to a large extent.

The flexible plate as a thermal expansion compensation component may be easily and costefficiently produced, e.g. by by injection molding or compression molding.

Injection molding is a widely used manufacturing process for producing parts and products in large volumes. It involves injecting molten material, typically plastic, into a mold cavity under high pressure. Once the material cools and solidifies within the mold, the finished part is ejected, ready for further processing or assembly.

Compression molding is a manufacturing process that involves shaping a material, typically a thermosetting polymer or composite, by applying heat and pressure. In compression molding, a pre-measured amount of material is placed into an open mold cavity. The mold is then closed, and pressure is applied to compress the material within the mold cavity. Heat may also applied to facilitate the curing or setting of the material.

However, the manufacturing process used for the flexible plate is not limited to these examples.

In an embodiment, a volume of the first space between the outside surface and the flexible plate is variable by deformation of the flexible plate.

In other words, the tempering fluid may expand into the space formed between the housing and the flexible plate, which may evert and thereby provide an increased volume for the thermal expansion of the tempering fluid. The flexible plate may exhibit a flat or substantially flat shape having a thickness direction perpendicular to a normal direction of the substantially flat shape. The deformation of the flexible plate may refer to eversion or folding out or in of the flexible plate in the thickness direction without any or no substantial stretching or elongation of the flexible plate along a direction perpendicular to the thickness direction of the flexible plate.

In an embodiment, the flexible material exhibits an elastic modulus equal to or less than 1 GPa.

For example, the elastic modulus may be a Young's modulus. The flexible material may exhibit an elastic modulus equal to or less than 0.5 GPa, equal to or less than 0.2 GPa, equal to or less than 0.1 GPa, equal to or less than 0.05 GPa, equal to or less than 0.02 GPa, equal to or less than 0.01 GPa, or the like. The elastic modulus may be within a range defined by any two of above values. The present disclosure is not limited to any particular range of the elastic modulus of the flexible material, provided that the flexible plate may evert/deform so as to allow for the volume within the battery module to change by a predetermined percentage, for instance.

In an embodiment, the flexible material is one of a synthetic rubber, an elastomer, a silicone or a thermoplastic.

In an embodiment, the corrugated shape of the flexible plate is formed by at least one ridge and/or groove of the flexible plate, each of the at least one ridge and/or groove forming a closed loop.

In other words, the plate's surface may exhibit a series of alternating ridges and grooves, creating a wavy or undulating pattern. These ridges and grooves may be parallel to each other and run across the surface of the plate. The presence of these corrugations allows the plate to flex and bend more easily while maintaining its structural integrity. Each ridge and/or groove may form a closed loop, meaning it connects back to itself without interruption.

In an embodiment, the housing and the first space are completely filled with the tempering fluid.

In other words, the inner space of the battery module (the inner space of the housing and the space formed between the flexible plate and the housing) does not include any or no substantial amount of gas. It goes without saying that other components of the battery module, like battery cells, electric connection portions, sensors, wires, etc. may be included in the battery module.

Without any gas being included in the battery module, the module may be operated in any installation orientation, since every battery cell may be kept in direct thermal contact with the tempering fluid. Further, the battery module may be installed in a moving structure like a vehicle that is subject to acceleration forces. However, such forces do not cause the battery cells to no longer be completely immersed in tempering fluid/liquid.

In an embodiment, the battery module further comprises a cover arranged on the flexible plate to form a second space between the flexible plate and the cover.

The cover may provide protection to the flexible plate from external elements such as moisture, dust, debris, and mechanical damage. This protection can extend the lifespan of the flexible plate and maintain its functionality over time. In some cases, covering the flexible plate can enhance safety by preventing direct contact with moving parts or potentially hazardous materials. The cover can be designed to integrate additional features or functionalities, such as mounting points for other components, access points for maintenance, or channels for routing cables or hoses.

The second space formed between the flexible plate and the cover is a space into which the flexible plate may evert/unfold when the tempering fluid within the battery module expands due to increase in temperature. When the flexible plate is in an unfolded/everted state, the volume of the second space may decrease to zero, for example.

In an embodiment, at least one opening is provided on the cover forming a gaseous passage between the second space and an outside of the battery module.

With this setup, gas included in the second space (e.g. air) may exit or enter the second space when the volume of the second space changes due to the flexible plate being deformed.

In an embodiment, the cover is formed by a plastic, a metal, or a fiber-reinforced plastic.

For example, the cover may be formed by Polypropylene, Polyethylene, Aluminum, Glass Fiber-Reinforced Plastic, or Carbon Fiber-Reinforced Plastic. However, the present disclosure is not limited to any specific material of the cover.

In an embodiment, a ratio of the volume of the first space and a volume of the tempering fluid included in the housing, at a reference temperature, is in the range of 0 % to 10 %.

In other words, the corrugated shape of the flexible plate may be sized such that a volume formed between the housing and the flexible plate, in an everted state, is a predetermined percentage, with reference to the volume occupied by the tempering fluid at the reference temperature. For example, the predetermined percentage may be 1%, 2%, 5%, 10%, or the like, or in a range between any combination of said percentages, for example.

This allows for the tempering fluid to expand into the first space (by deformation of the flexible plate) without a substantial pressure within the battery module for a temperature range typical for application scenarios of a battery module, e.g. in an electric vehicle.

In an embodiment, the battery module further comprises a plurality of pins arranged on the outside surface of the housing, wherein a plurality of holes is provided on the flexible plate at positions corresponding to positions of the plurality of pins, and the flexible plate is positioned with the pins protruding through the holes of the flexible plate.

In other words, in the battery module, a collection of pins is provided along the exterior surface of the housing. These pins may serve as components for securing various parts of the module together. Concurrently, a series of holes are placed on the flexible plate. These holes align with the positions of the pins on the housing. Consequently, during assembly, the flexible plate may be precisely positioned so that the pins extend through the corresponding holes in the plate. This setup allows for a secure and stable connection between the flexible plate and the housing, ensuring the structural integrity and functionality of the battery module.

In an embodiment, a plurality of holes is provided on the cover at positions corresponding to the positions of the plurality of pins, and the cover is positioned with the pins protruding through the holes of the flexible plate and the holes of the cover.

In other words, in this setup, the cover of the battery module is designed with multiple holes placed at positions that align with the pins arranged on the exterior surface of the housing. These holes on the cover correspond to the locations of the pins. During assembly, after the flexible plate has been positioned with the pins protruding through its corresponding holes, the cover is then placed over the flexible plate and housing. The holes on the cover also align with the positions of the pins. As a result, when the cover is positioned, the pins extend not only through the holes in the flexible plate but also through the corresponding holes in the cover.

This setup may ensure that all components of the battery module are securely interconnected. By having the pins protrude through both the flexible plate and the cover, the entire assembly is held firmly together, providing stability, structural integrity, and protection to the internal components of the battery module. Additionally, this configuration simplifies assembly and disassembly processes, facilitating maintenance and servicing operations when needed.

In an embodiment, the battery module further comprises at least one first clamping rib arranged on the outside surface of the housing and at least one second clamping rib arranged on the cover, wherein the flexible plate is arranged between the housing and the cover, thereby forming, by the first clamping ribs and the second clamping ribs, a liquid-tight seal of the housing and the first space against the outside of the battery module.

In other words, the battery module includes specific features designed to ensure a tight seal between its components, thereby preventing the leakage of liquids from the module's interior. Firstly, the outside surface of the housing is equipped with at least one first clamping rib, while the cover is fitted with at least one second clamping rib. These clamping ribs serve as raised protrusions along the edges of the housing and cover, respectively. The flexible plate is positioned between the housing and the cover, essentially acting as a barrier or partition within the module. When assembled, the first clamping ribs on the housing press against one side of the flexible plate, while the second clamping ribs on the cover press against the opposite side. As a result of this arrangement, the first and second clamping ribs effectively compress the flexible plate, creating a tight seal between the housing and the cover.

In an embodiment, the cover and the flexible plate are attached to the housing by a plurality of screws and respective screw holes provided on the housing.

In other words, since the assembly of the battery module may involve attaching both the cover and the flexible plate securely to the housing, the housing of the battery module is equipped with multiple screw holes, strategically positioned along its surface. These screw holes serve as anchor points for securing the components of the module in place. The cover and the flexible plate, each having compatible mounting points, are aligned and positioned over the housing. Then, screws are inserted through the screw holes in the housing, passing through corresponding holes in both the cover and the flexible plate. Once the screws are inserted, they are tightened, thereby fastening the cover and the flexible plate to the housing.

In an embodiment, the housing comprises a first liquid feedthrough and a second liquid feedthrough, for connection with a tempering system circulating the tempering fluid through the battery module.

The battery system of the present invention provides improved temperature control capabilities, homogeneous cooling of the battery cells within the battery module, and compensation of a change of volume of a tempering fluid included in the battery housing, thereby preventing a significant pressure increase. Further, the battery module according to the present disclosure can be easily produced and is autonomous, not requiring a separate expansion tank as all of the current state of the art solutions.

Additional benefits and advantages of the invention will become apparent from the detailed description of an embodiment and the drawings.

### BRIEF DESCRIPTION OF THE DRAWINGS

- **Fig. 1**: is an illustration of an external view of a battery module;
- **Fig. 2**: is a cut-out illustration of the basic arrangement of battery cells within a battery module;
- **Fig. 3**: is a cross-sectional view of the arrangement of battery cells within a battery module;
- **Fig. 4**: illustrates an exemplary electrical connection of a plurality of battery cells in parallel, which may be called a submodule;
- **Fig. 5**: illustrates two submodules connected in series;
- **Fig. 6**: illustrates a battery stack comprising a plurality of battery cells;
- **Fig. 7**: is an overview illustrations of the battery stack;
- **Fig. 8**: is a schematic illustration of the electric connection of the battery cells within the battery stack; and
- **Fig. 9a**: is an exploded view illustrating of a portion of the housing, a flexible plate, and a cover according to an embodiment, viewed from a first direction;
- **Fig. 9b**: is a view illustrating of the portion of the housing, the flexible plate, and the cover according to an embodiment in an assembled state, viewed from the first direction;
- **Fig. 9c**: is an exploded view illustrating of the portion of the housing, the flexible plate, and the cover according to an embodiment, viewed from a second direction;
- **Fig. 9d**: is a view illustrating of the portion of the housing, the flexible plate, and the cover according to an embodiment in an assembled state, viewed from the second direction;
- **Fig. 10a**: is an illustration of the portion of the housing;
- **Fig. 10b**: illustrates a top view and side views of the portion of the housing;
- **Fig. 10c**: is a cross-sectional view of the portion of the housing;
- **Fig. 11a**: is an illustration of the flexible plate in an unstressed state;
- **Fig. 11b**: illustrates a top view and side views of the flexible plate in an unstressed state;
- **Fig. 11c**: is a cross-sectional view of the flexible plate in an unstressed state;
- **Fig. 12a**: is an illustration of the flexible plate in an everted state;
- **Fig. 12b**: illustrates a top view and side views of the flexible plate in an everted state;
- **Fig. 12c**: is a cross-sectional view of the flexible plate in an everted state;
- **Fig. 13a**: is an illustration of the cover;
- **Fig. 13b**: illustrates a top view and side views of the cover;
- **Fig. 13c**: is a cross-sectional view of the cover;
- **Fig. 14**: is a top view of the portion of the housing, the flexible plate, and the cover in an assembled state;
- **Fig. 15a**: illustrates a cross-sectional view of the housing, the flexible plate in an unstressed state, and the cover in an assembled state along a first direction;
- **Fig. 15b**: illustrates a cross-sectional view of the housing, the flexible plate in an everted state, and the cover in an assembled state along the first direction;
- **Fig. 16a**: illustrates a cross-sectional view of the housing, the flexible plate in an unstressed state, and the cover in an assembled state along a second direction;
- **Fig. 16b**: illustrates a cross-sectional view of the housing, the flexible plate in an everted state, and the cover in an assembled state along the second direction; and
- **Fig. 17a to 17c**: are cross-sectional views illustrating the sealing of the battery module by clamping ribs.

### DESCRIPTION OF PREFERRED EMBODIMENT

In the following, a preferred embodiment will be described in detail through reference to the drawings.

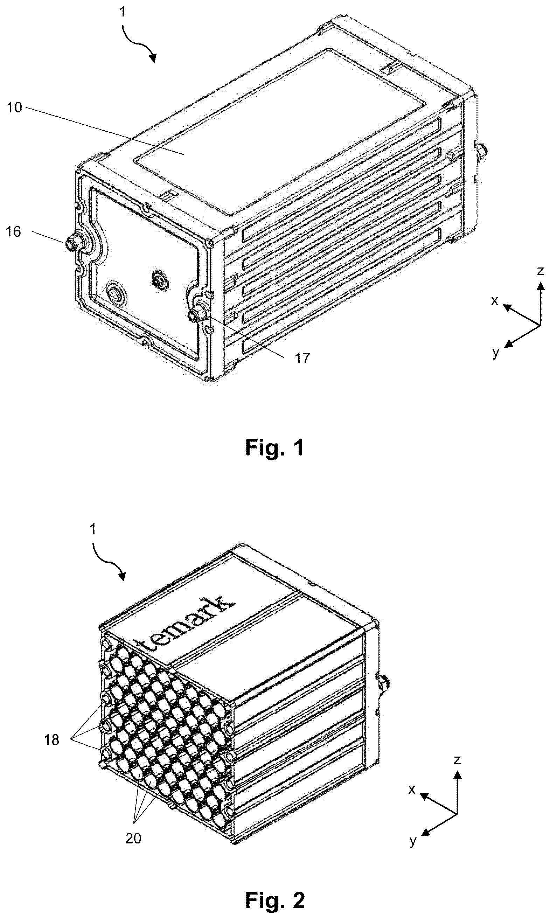

**Fig. 1** an illustration of an external view of a battery module 1. The battery module comprises a housing 10, which itself comprises a first end plate, a main body and a second end plate. Further, the battery module two electrical feedthroughs and four ports 16, 17 for connection with an external tempering system.

The housing 10 has the substantial shape of a rectangular cuboid, wherein two sides opposite to each other are formed by the first end plate and the second end plate and the remaining four sides are formed by the main body. Between the first end plate and the main body as well as between the second end plate and the main body, a flat seal is provided to close the housing 10 in a liquid-tight manner. The flat seals circumferentially surround the open end sides of the main body.

The liquid-tight housing 10 accommodates a plurality of battery cells 20 connected to each other so as to form a battery stack. Details thereon are described further below. Further, a first tempering fluid is included in the liquid-tight housing 10. The first tempering fluid may be a dielectric fluid (e.g. a dielectric liquid) with, preferably, a high thermal conductivity.

The main body is substantially box-shaped with two open sides opposite to each other. The main body is made of aluminium and, hence, exhibits a high thermal conductivity. However, the material of the housing is not limited to aluminium and may be made of another material having a thermal conductivity of 50 W/(K·m) or higher, preferably of 100 W/(K·m) or higher, more preferably of 150 W/(K·m) or higher, even more preferably of 200 W/(K·m) or higher.

The main body comprises grooves and/or ridges on two opposing outer sides. However, the main body is not limited to having grooves and/or ridges on two opposing sides. The main body may have grooves and/or ridges on only one side, two sides, three sides or all four sides. In the battery module 1 illustrated in **Fig. 1****,** the grooves and/or ridges extend in a direction of a main axis (y-axis) of the battery module 1. The direction of the main axis extends along the direction of maximum physical size of the main body.

The main body further comprises thread holes on a front and back side for mounting the first end plate and the second end plate thereto in a liquid-tight manner.

The first end plate and the second end plate are substantially of a flat rectangular shape. The substantially rectangular shape of the first and second end plates corresponds to the shape of the cross section of the main body. The first and second end plates comprise screw holes at positions corresponding to the positions of the thread holes of the main body.

The first end plate is mounted to one of the open end sides of the main body by a plurality of screws inserted to the screw holes of the first end plate and corresponding thread holes of the main body. The second end plate is mounted to the other one of the open end sides of the main body by a plurality of screws inserted to the screw holes of the second end plate and corresponding thread holes of the main body. The attachment of the end plates to the main body is not limited to being realized using screws and corresponding screw holes and thread holes, but may be realized using different attachment means like, for instance, bolts and nuts.

The electrical feedthroughs are connected to battery cells 20 included in the interior of the liquid-tight housing 1. Specifically one of the electrical feedthroughs is connected to a plus pole of a battery stack formed by the plurality of battery cells 20 in the battery module 1. The other one of the electrical feedthroughs is connected to a minus pole of the battery stack inside the battery module 1. That is, a voltage of the battery module 1 is accessible from the outside via the electrical feedthroughs. The electrical feedthroughs providing the electrical connection to the battery cells 20 are arranged in respective sealed holes within the first and second end plates. However, the electric feedthroughs may also be provided in the main body.

On each of the first and second end plates, two ports 16, 17 for connection with a secondary tempering system are provided. Details on the secondary tempering system are provided further below.

The battery module 100 comprises a pump (not illustrated) attached to an outer surface of the first end plate. The pump may be a micropump, which is connected to an interior of the liquid-tight housing 1 via first fluid channels. The pump is configured to pump the first tempering fluid through the first fluid channels. Thereby, a flow of the first tempering fluid is established within the liquid-tight housing 1.

The main body comprises a plurality of second fluid channels 18 (see Fig. 2), which are integrally formed with the main body between an inner surface and an outer surface of the main body. The second fluid channels 18 have a circular cross section and protrude into an interior of the main body. Thereby, the area in contact with the first tempering fluid within the main body is increased, leading to an improvement of the heat transfer rate between the first tempering fluid and a second tempering fluid (e.g. a tempering liquid) within the plurality of second fluid channels 18. As the second tempering fluid is not in contact with the battery cells 20, it is not required to be a dielectric, but may be, for instance, a common tempering fluid like a mixture of water and glycol.

Although the main body illustrated in Fig. 2 comprises nine straight second fluid channels 18 on two opposite sides and extending in a direction of the main axis y of the battery module 1, the main body is not limited thereto. In particular, the main body may comprise a different number of second fluid channels 18. Further, second fluid channels 18 may be provided on one, two, three or four sides of the main body. Further, the second fluid channels may be curved or meandering. Further, the cross section may be elliptical, rectangular, or the like.

**Fig. 2** is a cut-out illustration of the basic arrangement of the battery cells 20 within the battery module 1. The battery module 1 comprises a plurality of battery cells 20 within the liquid-tight housing 10. The battery cells 20 may be of lithium-ion, Nickel Cadmium, Nickel metal hydride, lead acid, polymer-based type or of any other type. The battery cells 20 have a cylindrical shape with their poles arranged at the opposing circular sides thereof. The battery cells 20 are arranged such that the circular sides are perpendicular to the main axis y of the battery module 1. The battery cells 20 are hexagonally arranged with respect to each other when viewed along the y axis.

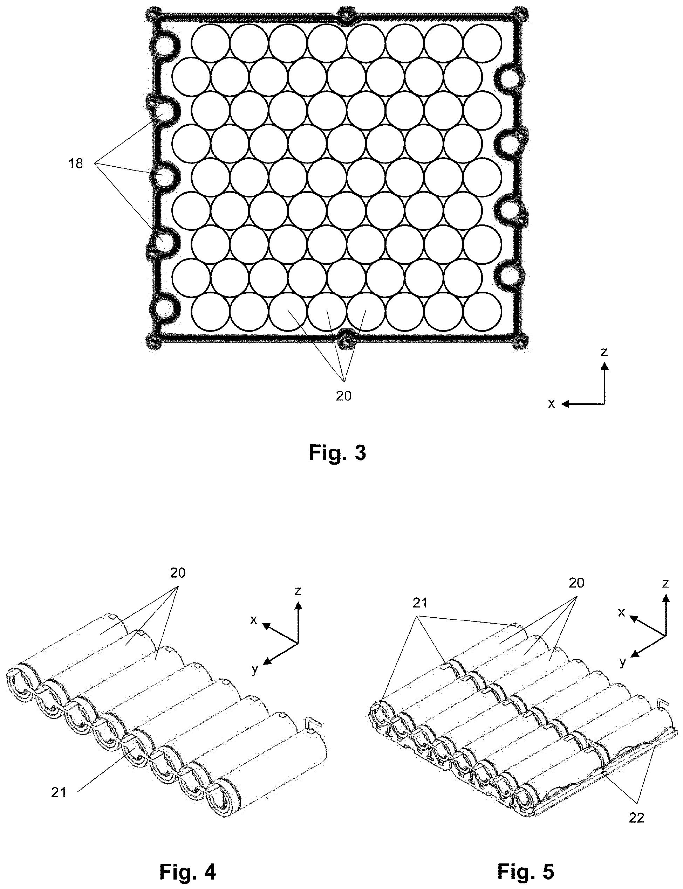

**Fig. 3** is a cross-sectional view of the arrangement of the battery cells 20 within the battery module 1. In the figure, the battery cells 20 and the second fluid channels 18 are indicated only exemplarily. The battery cells 20 are arranged in a dense hexagonal arrangement, wherein a distance between battery cells 20 adjacent to two opposite side surfaces of the main body, which comprise the second fluid channels 18, is larger than the distance between adjacent battery cells 20 and a distance between the battery cells 20 and an inner surface of the two other sides of the main body. With this arrangement, spaces not occupied by battery cells 20 are formed on opposite sides of the battery module 1 for guiding the flow of the first tempering fluid through the liquid-tight housing 10. However, the arrangement of the battery cells 20 is not limited to being a hexagonal arrangement, and may be different. For instance, the battery cells 20 may be arranged according to a rectangular or square arrangement.

First channels of the first end plate may connect the pump to an interior of the battery module 1 at positions corresponding to the locations of the spaces. With this arrangement, a flow of the first tempering fluid may be established by the pump around the battery cells 20 in an x-direction in a parallel manner.

The first and the second end plate comprise second fluid channels, which connect the second flow channels 18 of the main body with the ports 16, 17. That is, the second fluid channels 18 on a side of the main body are merged in the second fluid channels of the end plates and lead to a joint port for connection with a secondary tempering system.

The second tempering fluid is pumped through a port 16, the second fluid channels of an end plate, the second fluid channel 18 of the main body, the second fluid channel of the other end plate and through another port (not illustrated) out of the battery module 1.
the flow of the first tempering fluid within the spaces may be directed in a direction opposite to the flow of the second tempering fluid within the second fluid channels 18 of the main body. Thereby, the thermal coupling between the first tempering fluid and the second tempering fluid is optimized.

That is, the liquid-tight housing 10 acts as a heat exchanger between the first tempering fluid sealed within the liquid-tight housing 10 (including the pump and the first fluid channels ) and the second tempering fluid of the secondary tempering system.

**Fig. 4** illustrates an exemplary electrical connection of a plurality of battery cells 20 in parallel. The figure shows eight battery cells 20 connected to each other in a parallel manner by electrical connection bars 21. Said electrical connection bars 21 are, for instance, made of a metal. A first connection bar 21 connects the plus poles of the battery cells 20 with each other. A second connection bar (not illustrated) connects the minus poles of the battery cells 20 with each other.

The connection bars 21 may be welded to the plus or minus poles of the battery cells 20. For instance, each connection bar 21 may be laser-welded to either one of plus and minus poles of the battery cells 20. The connection bars 21 comprise a terminal portion for a connection with a measurement device like a voltage sensor (not illustrated). It goes without saying that more or less than eight battery cells 20 may be connected to each other in parallel. Further, the electric connection means is not limited to a bar 21, but may be a sheet or the like.

The battery cells 20 may be held by a cell holder 22. The cell holder 22 comprises a plurality of half-shell shaped portions for respectively holding the plurality of battery cells 20. Specifically, the battery cells 20 are held at the lateral surfaces thereof, leaving the pole sections uncovered. The cell holders 22 may be made of a non-conducting material like a synthetic material as glass-fiber reinforced plastic. The cell holder 22 may comprise mounting portions like screw holes for a connection with the liquid-tight housing 10 and/or another cell holder.

**Figs. 5** illustrate two sets of parallel connected battery cells 20 with respective cell holders 22, which are connected to each other in series.

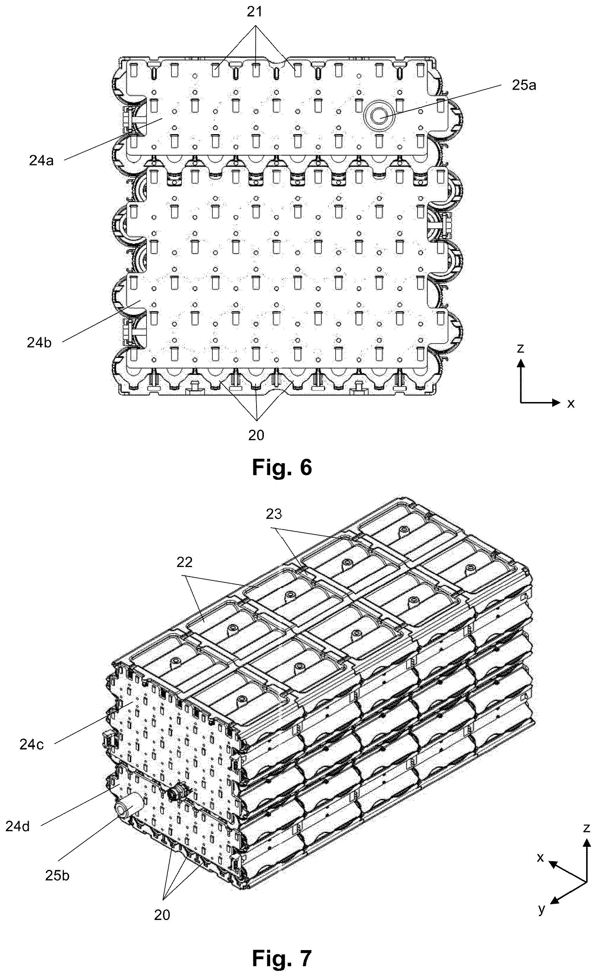

**Fig. 6** shows a battery stack comprising a plurality of battery cells 20 as view along the y-axis. **Fig. 7** is an overview illustrations of the battery stack. The battery cells 20 are connected to each other at a front side corresponding to an open end side of the main body by connection sheets 24a, 24b. The battery cells 20 are connected to each other at a back side corresponding to the other open end side of the main body by other connection sheets (not illustrated).

Specifically, at a side corresponding to the location of the first end plate, as illustrated in **Fig. 6****,** the plus poles of three upper rows of battery cells 20 are connected to each other by a first connection sheet 24a. The first connection sheet 24a is connected to the first electrical feedthrough 25a. Further, the minus pole of three inner rows of battery cells 20 and the plus poles of three lower rows of battery cells 20 are connected to each other by a second connection sheet 24b.

At a side corresponding to the location of the second end plate, the minus poles of the three upper rows of battery cells 20 and the plus poles of the three inner rows of battery cells 20 are connected to each other by a third connection sheet (not illustrated). Further, the minus poles of three lower rows of battery cells 20 are connected to each other by a fourth connection sheet (not illustrated). The fourth connection sheet s connected to a second electrical feedthrough.

The battery module 1 and, in particular, the battery stack is not limited to the described setup. In particular, the battery cells 20 may be arranged in a different manner, depending on the type of the battery cells 20, the total voltage and the performance to be achieved.

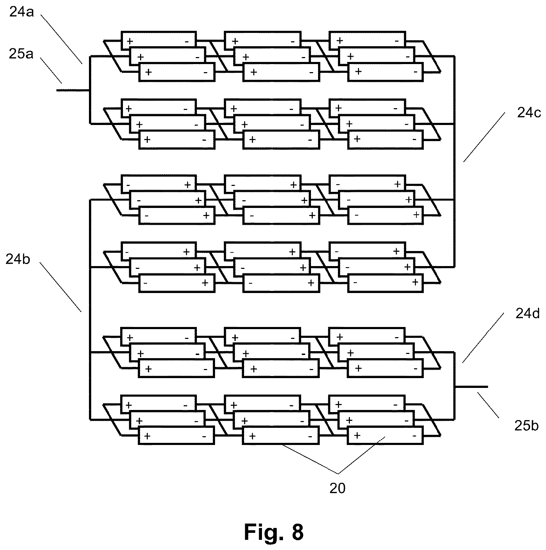

**Fig. 8** is a schematic illustration of the electric connection of the battery cells 20 within the battery stack. For reasons of clarity and comprehensibility, the battery stack is illustrated as comprising six layers of battery cells 20, wherein each layer comprises nine battery cells20 connected to each other in parallel or series. The layers are connected to each other by the four connection sheets 24a-d. The voltage of the entire battery stack is provided between the two electrical feedthroughs 25a, 25b. The illustration is a simplified visualization of the connection principal of the battery stack and, hence, the battery module 1 is not limited to the illustrated number of battery cells 20, rows and layers.

During charging of the battery module 1 or in a case where the battery module provides a high current, heat is generated within the battery module 1, mainly at positions of the battery cell poles. Said heat is transferred to the first tempering fluid, which may lead to a change of the volume of the first tempering fluid. When the liquid-tight housing 10 is entirely filled with the first tempering fluid, the pressure within the liquid-tight housing 10 may increase. Thus, the liquid-tight housing 10 is constructed so as to be pressure-tight. For instance, the liquid-tight housing may be pressure-tight up to a positive pressure of 1bar, 1.5 bars, 2 bars or the like. Similarly, if the temperature of the first tempering fluid decreases, the pressure within the liquid-tight housing 10 may decrease. Hence, the liquid-tight housing is constructed so as to be pressure-tight down to a negative pressure of 1 bar. This may be achieved by utilizing, for instance, a main body, first and second end plates of sufficient thickness pressure-tightly connected to each other using a sufficient number of screws with adequate seals.

In order to allow for the volume change of the first tempering fluid without an excessive increase/decrease of pressure within the liquid-tight housing 1, at least one opening may be provided on the housing 10, forming a fluid connection between an inside of the housing 10 and an outside of the housing. Further, a flexible plate may be arranged on an outside surface of the housing 10 liquid-tightly covering the at least one opening. The flexible plate is formed of a flexible material allowing for the first tempering fluid to expand into a first space between the outside surface and the flexible plate. In an unstressed state, the flexible plate exhibits a corrugated shape. In the following, a setup of a battery module 1 comprising the flexible plate forming a pressure compensation element is described.

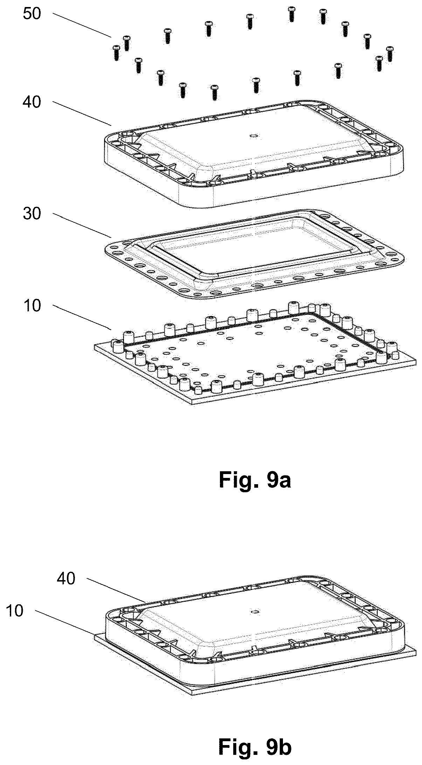

**Fig. 9a and 9b** illustrate an overview of the basic setup of a portion of the battery module 1 including the flexible plate. **Fig. 9a** is an exploded view illustrating apportion of the housing 10, a flexible plate 30, a cover 40, and a plurality of screws 50. **Fig. 9b** illustrates said components in an assembled state. In the figures, the portion of the housing 10 is illustrated as a cover plate to be connected with another portion of the housing, thereby forming the housing 10. Although the portion of the housing is not illustrated in Fig. 1,, the portion of the housing illustrated in the figures may be considered a cutout of any portion of the housing 10 as illustrated, for instance, in Fig. 1. For example, the illustrated portion of the housing 10 may be an upper portion of the main body as illustrated in Fig. 1. In the following, the portion of the housing 10 will simply be referred to as the housing 10. As illustrated in Fig. 9a and 9b, the battery module 1 is assembled in the order of the housing 10, the flexible plate 30, and the cover 40, wherein the components are connected to each other by screws 50.

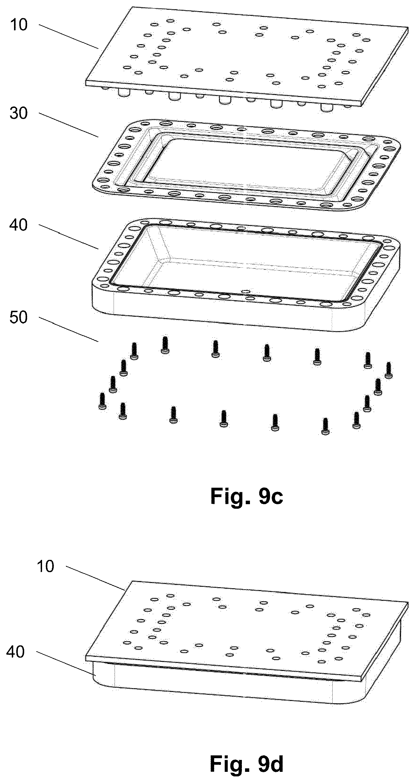

**Fig. 9c and 9d** illustrate an overview of the basic setup of a portion of the battery module 1 including the flexible plate viewed from a different direction as Fig. 9a and 9b. **Fig. 9c** is an exploded view illustrating apportion of the housing 10, a flexible plate 30, a cover 40, and a plurality of screws 50. **Fig. 9d** illustrates said components in an assembled state.

In the following, each of the components illustrated in Figs. 9a to 9d are described in detail.

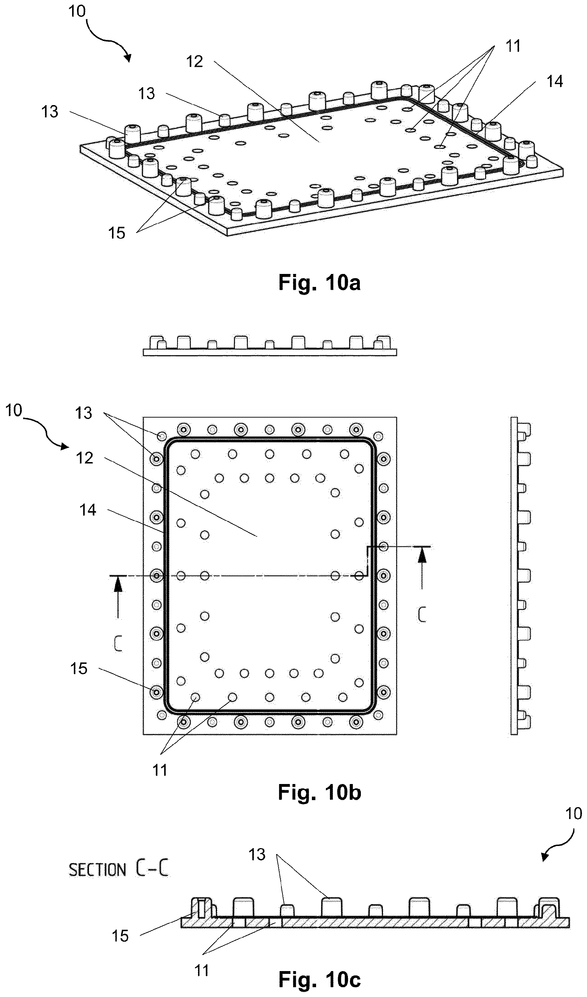

**Fig. 10a** is an illustration of the portion of the housing 10. **Fig. 10b** illustrates a top view and side views of the portion of the housing 10. **Fig. 10c** is a cross-sectional view of the portion of the housing 10 along the line C-C as illustrated in Fig. 10b.

The housing 10 includes at least one opening 11, forming a fluid connection between an inside of the housing 10 and an outside of the housing 10. Although a plurality of openings 11 are illustrated in Fig. 10a-c, at only one, two, three or another number of openings 11 may be provided. The openings form a fluid connection between an inside of the housing and an outside of the housing.

That is, the openings allow the first tempering fluid (e.g. a first tempering liquid) included in the housing 10 to flow through the openings to the outside of the housing 10.

The housing 10 comprises a plurality of pins 13 arranged on the outside surface 12 of the housing 10. In Figs. 10a-c, two types of pins are provided on the housing 10, wherein the two types of pins 13differ in size and, in particular, in that screw holes 15 are provided in one type of the pins 13. The pins 13 are arranged in a circumferential manner. In other words, in the illustrated portion of the housing 10, the pins 10 are provided within edge regions of the illustrated portion of the housing 10.

Further, the housing 10 comprises at least one clamping rib 14, that is provided in a circumferential manner on the inside with respect to the pins 13 and respective screw holes 15. The clamping ribs 14 serve the purpose of liquid-tightly sealing the battery module 1 by compressing the flexible plate 30 between the clamping ribs 14 of the housing and opposing clamping ribs 43 of the cover 40. This setup is described in detail further below.

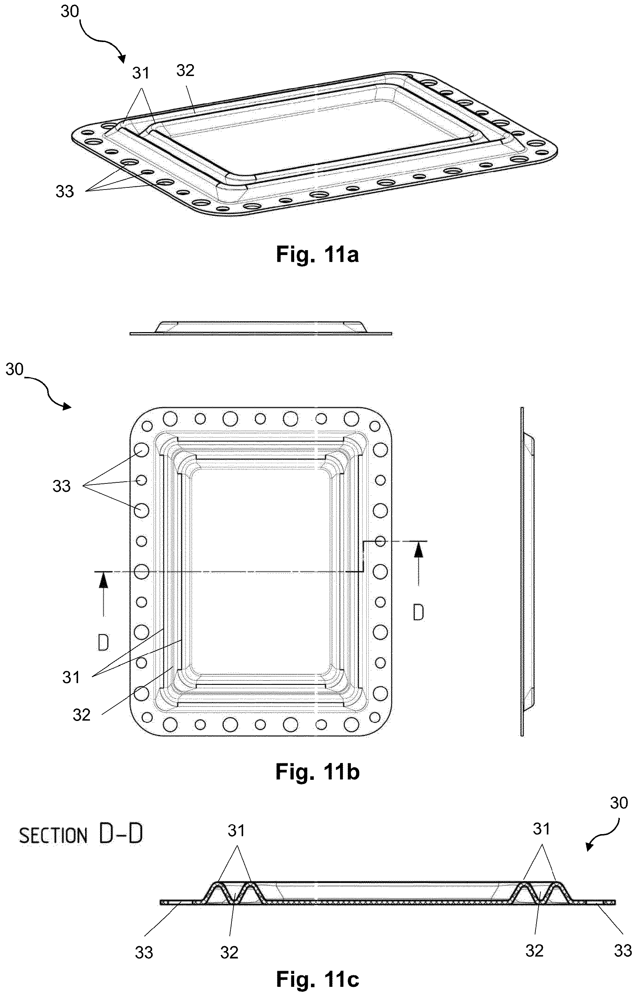

**Fig. 11a** is an illustration of the flexible plate 30 in an unstressed state. **Fig. 11b** illustrates a top view and side views of the flexible plate 30 in an unstressed state. **Fig. 11c** is a cross-sectional view of the flexible plate 30 in an unstressed state.

The flexible plate 30 exhibits a substantially flat and rectangular shape. The rectangular shape may correspond to the shape of the portion of the housing 10 illustrated in Fig. 10a-c. The flexible plate 30 may exhibit a thickness of a few mm. for instance, the flexible plate 30 may have a thickness in a range of 0.2 to 4 mm, preferably between 0.5 and 2 mm, more preferable between 0.8 and 1.5 mm.

The flexible plate 30 exhibits, in an unstressed state, a corrugated shape. An unstressed state relates to a state where no external forces are applied to the flexible plate 30. The flexible plate 30 exhibits an elastic modulus equal to or less than 1 GPa. For example, the elastic modulus of the flexible plate 30 lies in a range from 0.01 to 1 GPa. The material of the flexible plate may be one of a synthetic rubber, an elastomer, a silicone, a thermoplastic, or the like. However, the material of the flexible plate 30 is not limited to any specific one of these examples.

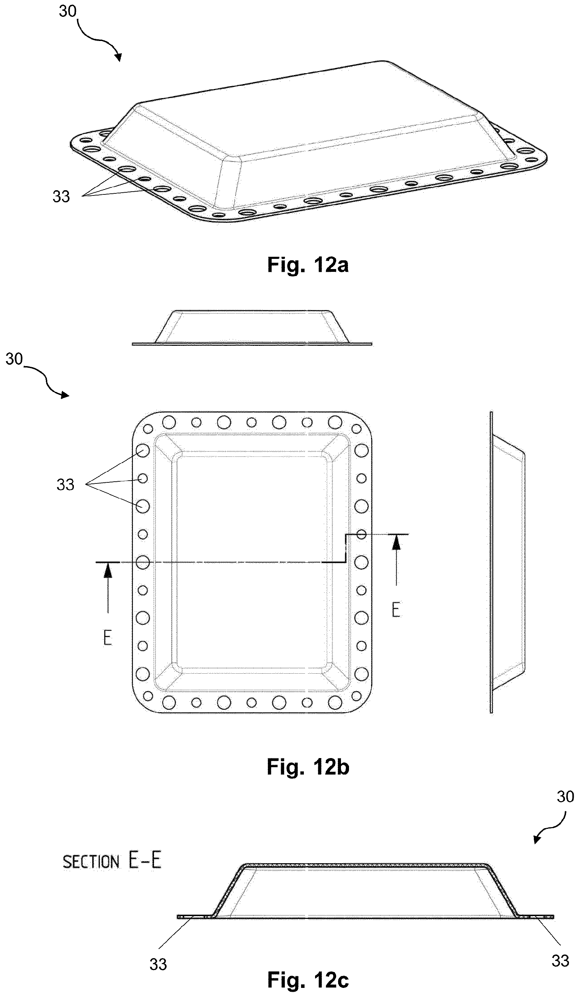

As can be seen from Figs. 11a and 11b, the flexible plate 30 exhibits, in an unstressed state, a corrugated shape. For example, the flexible plate may exhibit at least one ridge 31 and/or at least one groove 32. In the illustrated example, the flexible plate comprises two ridges 31 and a groove 32 located therebetween. However, the flexible plate 30 may exhibit one or more ridges 31 and/or one or more grooves 32. The one or more ridges 31 and/or the one or more grooves 32 each form a closed loop. In the illustrated example, two ridges 31 form a closed loop each, wherein the inner ridge 31 forms a loop within a loop formed by an outer ridge 31. Accordingly, the groove 32 between the ridges 31 forms a closed loop as well. The corrugated shape of the flexible plate 30 allows the flexible plate to evert when a force is applied to one of the two sides of the flexible plate, as will be described with reference to Figs. 12a-c further below.

The flexible plate 30 comprises a plurality of holes 33 at an outer region of the flexible plate 30. The locations of the holes 33 correspond to the locations of the pins 13 of the housing 10. That is, the flexible plate may be positioned on the housing 10 such that the pins 13 of the housing 10 protrude through the holes 33 of the flexible plate 30.

**Fig. 12a** is an illustration of the flexible plate 30 in an everted state. **Fig. 12b** illustrates a top view and side views of the flexible plate 30 in the everted state. **Fig. 12c** is a cross-sectional view of the flexible plate 30 in the everted state.

As can be seen in Figs. 12a to 12c, the corrugated shape of the flexible plate 30 in the unstressed state allows the flexible plate 30 to evert such that a volume on a lower side of the flexible plate 30 as illustrated in the figure is increased. This may be the case when a force on a lower side of the flexible plate 30 is exerted on the flexible plate 30.

It is a particular advantage of the flexible plate 30, in particular over a balloon or bellows setup that the flexible plate 30 may be manufactured easily and cost-effectively. For this purpose, well-known manufacturing process may be applied. For example, the flexible plate 30 may be manufactured by injection molding or compression molding.

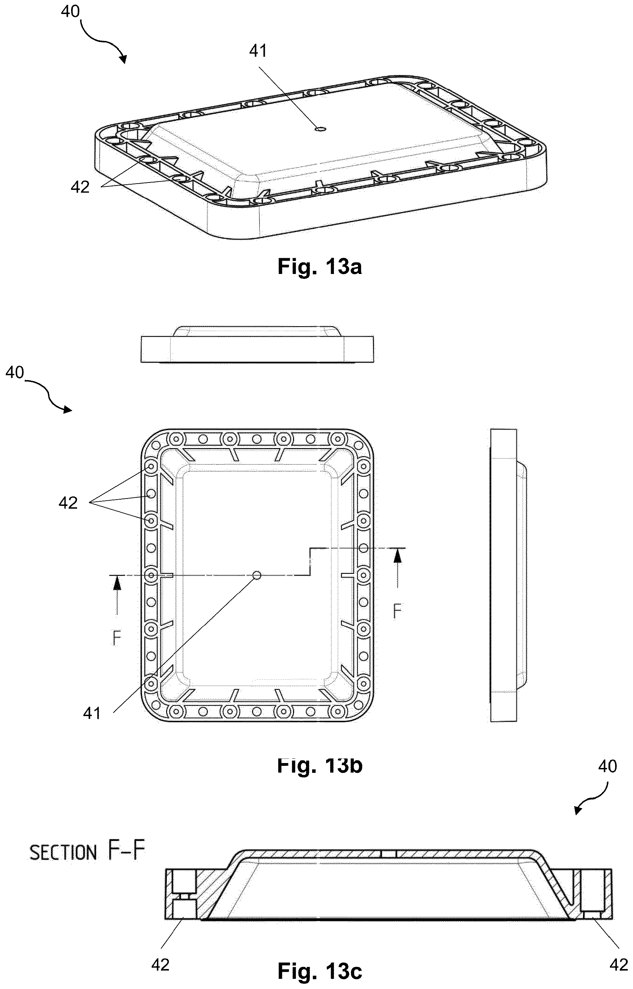

**Fig. 13a** is an illustration of the cover 40. **Fig. 13b** illustrates a top view and side views of the cover 40. **Fig. 13c** is a cross-sectional view of the cover 40.

The cover 40 exhibits a circumferential shape corresponding to the circumferential shape of the flexible plate 30. The cover 40 is configured to be arranged on the flexible plate 30 to form a second space between the flexible plate 30 and the cover 40. Said space is described in detail further below. The cover 40 exhibits a space within the cover 40, into which the flexible plate 30 may evert, as described above. On a top surface of the cover, at least one opening 41 is provided. The opening 41 forms a gaseous passage between a lower portion of the cover 40 and an upper portion of the cover 40. That is, when the flexible plate 30 everts (e.g. when a force is applied to the flexible plate 30), a gas, e.g. air, between the flexible plate 30 and the cover 40 may exit the space between the flexible plate 30 and the cover 40 through the opening 41.

For example, the cover 40 may be formed by a plastic, a metal, a fiber-reinforced plastic, and the like.

The cover 40 exhibits a plurality of holes 42 that are arranged in an outer portion of the cover 40 in a circumferential manner. The holes 42 are located at positions corresponding to the positions of the pins 13 provided on the outside surface 12 of the housing 10 and the positions of the plurality of holes 33 provided on the flexible plate 30. In this, way, when the cover 40 is positions on the flexible plate 30, which is positioned on the housing 10, the plurality of pins 13 protrude through the holes 33 of the flexible plate 30 and the holes 42 of the cover 40. This allows for the cover 40 and the flexible plate 30 to be precisely positioned on the housing 10.

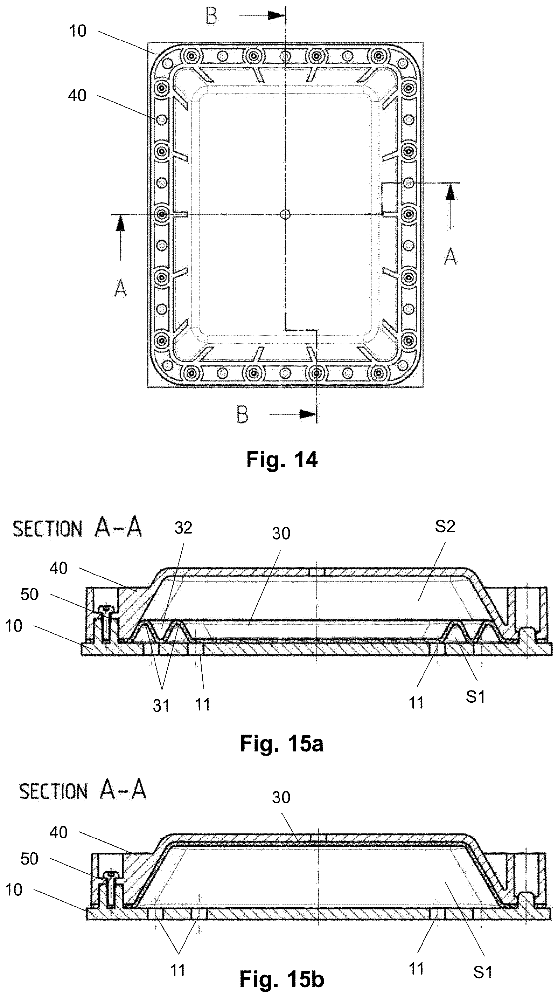

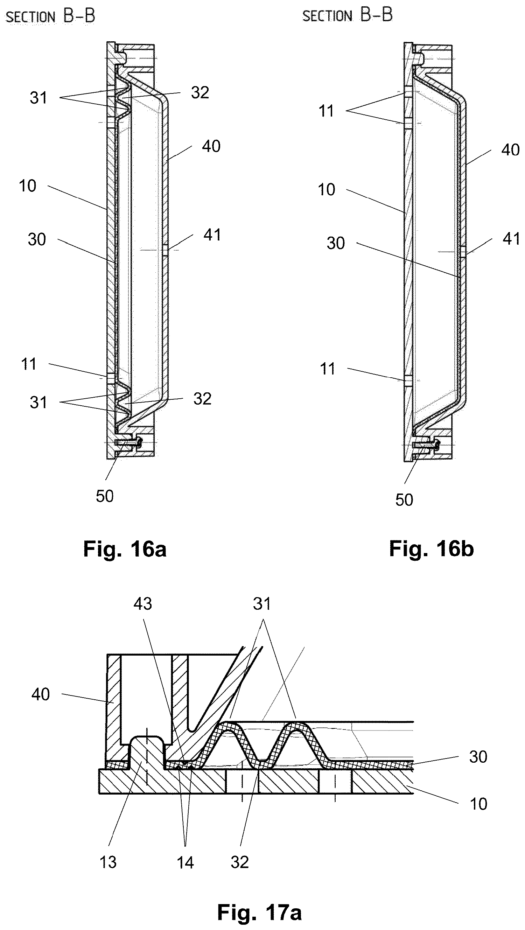

**Fig. 14** is a top view of the portion of the housing 10, the flexible plate 30, and the cover 40 in an assembled state. **Fig. 15a and 15b** illustrate cross-sectional views of the housing, the flexible plate 30, and the cover 40 in an assembled state along a first direction as indicated by line A-A in Fig. 14. **Fig. 16a and 16b** illustrate cross-sectional views of the housing 10, the flexible plate 30, and the cover 40 in an assembled state along a second direction as indicated by line B-B in Fig. 14.

Whereas Fig. 15a and 16a illustrates the setup with the flexible plate 30 being in an unstressed state, Fig. 15b and 16b illustrate the setup with the flexible plate 30 being deformed/everted, for instance in a case where the volume of the first tempering fluid within housing 10 has increased due to an increase in temperature. In this case, the tempering fluid flows through the holes 11 of the housing 10 into a first space S1 formed between the housing 10 and the flexible plate and, as a consequence, a force is applied to the flexible plate 30, causing the flexible plate 30 to deform and evert into the second space S2 formed between the flexible plate 30 and the cover 40.

As can be seen in Fig. 15a and 16a, the flexible plate 30 exhibits the corrugated shape with ridges 31 and grooves 32. Said ridges 31 and grooves 32 allow for the flexible plate 30 to evert into the second space S2 without the flexible plate 30 being stretched. In the fully everted state, the flexible plate 30 may deform in such a manner that the volume of the second space D2 decreases to substantially zero and the first space S1, which is filled with the first tempering fluid, reaches a maximum volume, which may be defined by the size of the cover 40.

Since the volume of the first space S1 may increase with deformation of the flexible plate, wherein the flexible plate 30 is substantially not stretched, the volume occupied by the first tempering fluid (within the housing 10 and within the first space S1) may increase without a substantial increase in pressure within the battery module 1.

That is, it is a particular advantage of using a flexible plate 30 with a corrugated shape that the tempering fluid included in the battery module 1 may change its volume without a substantial increase in pressure. This is due to the flexible plate 30 everting into the second space S2 without being extensively stretched, thereby increasing the volume of the first space S1.

The flexible plate 30 and, in particular, the ridges 31 and grooves 32 may exhibit a size allowing for the tempering fluid to expand, with respect to a reference temperature (e.g. 296 K), by a predetermined percentage. The predetermined percentage may be 1%, 2%, 5%, 10%, or the like. The predetermined percentage may be set according to expected operating temperatures of the battery module 1 and/or the kind of first tempering fluid used.

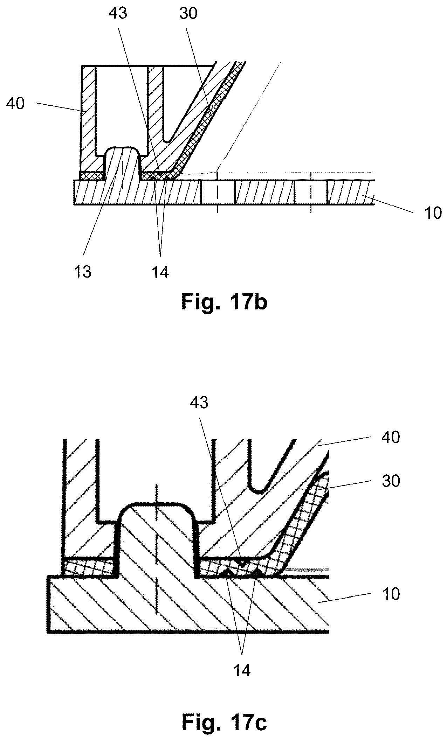

**Figs. 17a to 17c** are cross-sectional views illustrating the sealing of the battery module 1 by clamping ribs 14, 43. Whereas Fig. 17a illustrates the cross-sectional view in a state where the flexible plate 30 is unstressed, Fig. 17b illustrates a situation where the flexible plate 30 is everted. Fig. 17c is an enlarged section illustrating, in particular, the configuration of the clamping ribs 14, 43. The battery module 1 comprises at least one first clamping rib 14 arranged on the outside surface 12 of the housing 10 and at least one second clamping rib 43 arranged on the cover 40. As illustrated in the figures, the flexible plate 30 is arranged between the housing 10 and the cover 40. The clamping ribs 14, 43 protrude from the housing 10 and the cover 40, respectively, and are provided in circumferential portions of the housing 10 and the cover 40. The first clamping ribs 14 and the second clamping ribs 43 are positioned essentially opposite to each other in the assembled battery module. When the cover 40 is attached to the housing 10 with the flexible plate 30 located in between, the clamping ribs 14, 43 are pressed against and squeeze the flexible plate 30. Thereby, a liquid-tight seal of the housing 10 and the first space S1 against the outside of the battery module 1 is formed.

Although, in the illustrated example, the housing 10 comprises two clamping ribs 14 and the cover comprises one clamping rib 43, the present disclosure is not limited thereto. The housing 10 and/or the cover 40 may exhibit at least one clamping rib 14, 43 each. That is, the housing 10 and/or the cover 40 may comprise two, three or more clamping ribs 14, 43.

The battery module 1 may, in addition to the components described above, comprises one or more temperature sensors attached to a battery cell 20, a cell holder, an inner surface of the housing 10 or the like, and respective temperature sensing lines for providing temperature sensor signals to an outside of the battery module 1. The battery module 1 may further comprise one or more voltage sensing lines connected, for instance, to a connection bar or a connection sheet for providing a voltage signal to a voltage sensor outside of the battery module 1. Further, the battery module 1 may comprise one or more current-limiting elements like fuses. The battery module 1 may further comprise a controller like a microprocessor connected to the pump. The controller may receive voltage signals from the voltage sensor and/or temperature signals from the temperature sensors. Based on the temperature and/or voltage signals and, for instance, respective set points, the controller controls operation of the pump.

A battery system according to an embodiment comprises at least one battery module 1 as described above and a secondary tempering system connected to the ports of the battery modules 1. The tempering system comprises, for instance, a pump, a heat exchanger and fluid pipes for establishing a flow of the second tempering fluid (e.g. a second tempering liquid). For instance, the tempering system may be connected to a plurality of battery modules 1. For example, the second tempering fluid may flow through the plurality of battery modules 1 in a parallel or serial manner. The heat exchanger of the tempering system may be configured to exchange heat between the second tempering fluid and a heat sink and/or a heat source. The heat sink or source may be, for instance, ambient air. Further, the tempering system may comprise an electrical heater configured to heat the second tempering fluid in order to allow for temperature control of each of the battery modules 1.

## Claims

1. A battery module, comprising
a housing (10), wherein at least one opening (11) is provided, forming a fluid connection between an inside of the housing (10) and an outside of the housing (10);
a plurality of battery cells (20) arranged in the housing (10);
a tempering fluid included in the housing (10);
a flexible plate (30) arranged on an outside surface (12) of the housing (10) and liquid-tightly covering the at least one opening (11), wherein
the flexible plate (30) is formed of a flexible material allowing for the tempering fluid to expand into a first space (S1) between the outside surface (12) and the flexible plate (30), and
**characterized in that**
the flexible plate (30) exhibits, in an unstressed state, a corrugated shape.

2. The battery module according to claim 1, wherein
a volume of the first space (S1) between the outside surface (12) and the flexible plate (30) is variable by deformation of the flexible plate (30).

3. The battery module according to claim 1 or 2, wherein
the flexible material exhibits an elastic modulus equal to or less than 1 GPa.

4. The battery module according to any one of claims 1 to 3, wherein
the flexible material is one of a synthetic rubber, an elastomer, a silicone or a thermoplastic.

5. The battery module according to any one of claims 1 to 4, wherein
the corrugated shape of the flexible plate (30) is formed by at least one ridge (31) and/or groove (32) of the flexible plate (30), each of the at least one ridge (31) and/or groove (32) forming a closed loop.

6. The battery module according to any one of claims 1 to 5, wherein
the housing (10) and the first space (S1) are completely filled with the tempering fluid.

7. The battery module according to any one of claims 1 to 6, further comprising
a cover (40) arranged on the flexible plate (30) to form a second space (S2) between the flexible plate (30) and the cover (40).

8. The battery module according to claim 7, wherein
at least one opening (41) is provided on the cover (40) forming a gaseous passage between the second space (S2) and an outside of the battery module (100).

9. The battery module according to claim 7 or 8, wherein
the cover (40) is formed by a plastic, a metal, or a fiber-reinforced plastic.

10. The battery module according to any one of claims 7 to 9, wherein
a ratio of the volume of the first space (S1) and a volume of the tempering fluid included in the housing (10), at a reference temperature, is in the range of 0 % to 10 %.

11. The battery module according to any one of claims 7 to 10, further comprising
a plurality of pins (13) arranged on the outside surface (12) of the housing (10), wherein
a plurality of holes (33) is provided on the flexible plate (30) at positions corresponding to positions of the plurality of pins (13), and
the flexible plate (30) is positioned with the pins (13) protruding through the holes (33) of the flexible plate (30).

12. The battery module according to claim 11, wherein
a plurality of holes (42) is provided on the cover (40) at positions corresponding to the positions of the plurality of pins (13), and
the cover (40) is positioned with the pins (13) protruding through the holes (33) of the flexible plate (30) and the holes (42) of the cover (40).

13. The battery module according to any one of claims 7 to 12, further comprising
at least one first clamping rib (14) arranged on the outside surface (12) of the housing (10);
at least one second clamping rib (43) arranged on the cover (40), wherein
the flexible plate (30) is arranged between the housing (10) and the cover (40), thereby forming, by the first clamping ribs (14) and the second clamping ribs (43), a liquid-tight seal of the housing (10) and the first space (S1) against the outside of the battery module.

14. The battery module according to any one of claims 7 to 13, wherein
the cover (40) and the flexible plate (30) are attached to the housing (10) by a plurality of screws (50) and respective screw holes (15) provided on the housing (10).

15. The battery module according to any one of claims 1 to 14, wherein
the housing (10) comprises a first liquid feedthrough (16) and a second liquid feedthrough (17), for connection with a tempering system circulating the tempering fluid through the battery module.

## Patentansprüche

1. Batteriemodul, umfassend
ein Gehäuse (10), worin mindestens eine Öffnung (11) vorgesehen ist, die eine Fluidverbindung zwischen einem Inneren des Gehäuses (10) und einem Äußeren des Gehäuses (10) bildet;
eine Mehrzahl an Batteriezellen (20), die in dem Gehäuse (10) angeordnet sind;
ein Temperierfluid, das in dem Gehäuse (10) enthalten ist;
eine flexible Platte (30), die an einer äußeren Oberfläche (12) des Gehäuses (10) angeordnet ist und die mindestens eine Öffnung (11) flüssigkeitsdicht abdeckt, wobei
die flexible Platte (30) aus einem flexiblem Material gebildet ist, das es dem Termperierfluid ermöglicht, in einen ersten Raum (S1) zwischen der äußeren Oberfläche (12) und der flexiblen Platte (30) zu expandieren, und
**dadurch gekennzeichnet, dass**
die flexible Platte (30) in einem unbelasteten Zustand eine gewellte Form aufweist.

2. Batteriemodul nach Anspruch 1, wobei
ein Volumen des ersten Raums (S1) zwischen der äußeren Oberfläche (12) und der flexiblen Platte (30) durch Deformation der flexiblen Platte (30) variabel ist.

3. Batteriemodul nach Anspruch 1 oder 2, wobei
das flexible Material ein Elastizitätsmodul gleich oder geringer als 1 GPa aufweist.

4. Batteriemodul nach einem der Ansprüche 1 bis 3, wobei
das flexible Material eines aus einem synthetischen Gummi, einem Elastomer, einem Silikon oder einem Thermoplast ist.

5. Batteriemodul nach einem der Ansprüche 1 bis 4, wobei
die gewellte Form der flexiblen Platte (30) durch mindestens eine Erhöhung (31) und/oder Furche (32) der flexiblen Platte (30) gebildet ist, wobei jede der mindestens einen Erhöhung (31) und/oder Furche eine geschlossene Schleife bildet.

6. Batteriemodul nach einem der Ansprüche 1 bis 5, wobei
das Gehäuse (10) und der erste Raum (S1) vollständig mit dem Temperierfluid gefüllt sind.

7. Batteriemodul nach einem der Ansprüche 1 bis 6, ferner umfassend
eine Abdeckung (40), die auf der flexiblen Platte (30) angeordnet ist, um einen zweiten Raum (S2) zwischen der flexiblen Platte (30) und der Abdeckung (40) zu bilden.

8. Batteriemodul nach Anspruch 7, wobei
mindestens eine Öffnung (41) an der Abdeckung (40) vorgesehen ist, die einen Gasdurchlass zwischen dem zweiten Raum (S2) und einem Äußeren des Batteriemoduls (100) bildet.

9. Batteriemodul nach einem der Ansprüche 7 oder 8, wobei
die Abdeckung (40) aus einem Kunststoff, einem Metall, oder einem faserverstärkten Kunststoff gebildet ist.

10. Batteriemodul nach einem der Ansprüche 7 bis 9, wobei
ein Verhältnis des Volumens des ersten Raums (S1) und eines Volumens des Temperierfluids, das in dem Gehäuse (10) enthalten ist, bei einer Referenztemperatur in dem Bereich von 0 % bis 10 % liegt.

11. Batteriemodul nach einem der Ansprüche 1 bis 10, ferner umfassend
eine Mehrzahl an Stiften (13), die an der äußeren Oberfläche (10) des Gehäuses (10) angeordnet sind, wobei
eine Mehrzahl an Löchern (33) an der flexiblen Platte (30) an Positionen, die Positionen der Mehrzahl an Stiften (13) entsprechen, vorgesehen sind, und
die flexible Platte (30) so angeordnet ist, dass die Stifte (30) durch die Löcher (33) der flexiblen Platte (30) ragen.

12. Batteriemodul nach Anspruch 11, wobei
eine Mehrzahl an Löchern (42) an der Abdeckung (40) an Positionen, die den Positionen der Mehrzahl an Stiften (13) entsprechen, vorgesehen sind, und
die Abdeckung (40) so angeordnet ist, dass die Stifte (13) durch die Löcher (33) der flexiblen Platte (30) und die Löcher (42) der Abdeckung (40) ragen.

13. Batteriemodul nach einem der Ansprüche 7 bis 12, ferner umfassend
mindestens eine erste Klemmrippe (14) die an der äußeren Oberfläche (12) des Gehäuses (10) angeordnet ist;
mindestens eine zweite Klemmrippe (43), die an der Abdeckung (40) angeordnet ist, wobei
die flexible Platte (30) zwischen dem Gehäuse (10) und der Abdeckung (40) angeordnet ist, wodurch durch die ersten Klemmrippen (14) und die zweiten Klemmrippen (43) eine flüssigkeitsdichte Dichtung des Gehäuses (10) und des ersten Raums (S1) gegenüber dem Äußeren des Batteriemoduls gebildet ist.

14. Batteriemodul nach einem der Ansprüche 7 bis 13, wobei
die Abdeckung (40) und die flexible Platte (30) an dem Gehäuse (10) durch eine Mehrzahl an Schrauben (50) und jeweiligen Schraubenlöchern (15), die an dem Gehäuse (10) vorgesehen sind, angebracht ist.

15. Batteriemodul nach einem der Ansprüche 1 bis 14, wobei
das Gehäuse (10) eine erste Flüssigkeitsdurchführung (16) und eine zweite Flüssigkeitsdurchführung (17) zur Verbindung mit einem Temperiersystem, das das Temperierfluid durch das Batteriemodul zirkuliert, umfasst.

## Revendications

1. Module de batterie, comprenant
un boîtier (10), dans lequel au moins une ouverture (11) est disposée, formant une connexion fluidique entre un intérieur du boîtier (10) et un extérieur du boîtier (10) ; une pluralité de cellules de batterie (20) agencées dans le boîtier (10) ;
un fluide de régulation thermique intégré dans le boîtier (10) ;
une plaque flexible (30) agencée sur une surface extérieure (12) du boîtier (10) et recouvrant de manière étanche aux liquides ladite au moins une ouverture (11),dans lequel
la plaque flexible (30) est formée d'un matériau flexible permettant au fluide de régulation thermique de se dilater dans un premier espace (S1) entre la surface extérieure (12) et la plaque flexible (30), et
**caractérisé en ce que**
la plaque flexible (30) présente, dans un état sans contrainte, une forme ondulée.

2. Module de batterie selon la revendication 1, dans lequel
un volume du premier espace (S1) entre la surface extérieure (12) et la plaque flexible (30) est variable par déformation de la plaque flexible (30).

3. Module de batterie selon la revendication 1 ou 2, dans lequel
le matériau flexible affiche un module d'élasticité inférieur ou égal à 1 GPa.

4. Module de batterie selon l'une quelconque des revendications 1 à 3, dans lequel
le matériau flexible est l'un parmi un caoutchouc synthétique, un élastomère, une silicone ou un matériau thermoplastique.

5. Module de batterie selon l'une quelconque des revendications 1 à 4, dans lequel la forme ondulée de la plaque flexible (30) est formée par au moins une crête (31) et/ou une rainure (32) de la plaque flexible (30), chacune de la au moins une crête (31) et/ou la au moins rainure (32) formant une boucle fermée.

6. Module de batterie selon l'une quelconque des revendications 1 à 5, dans lequel le boîtier (10) et le premier espace (S1) sont complètement remplis du fluide de régulation thermique.

7. Module de batterie selon l'une quelconque des revendications 1 à 6, comprenant en outre
un couvercle (40) disposé sur la plaque flexible (30) pour former un second espace (S2) entre la plaque flexible (30) et le couvercle (40).

8. Module de batterie selon la revendication 7, dans lequel
au moins une ouverture (41) est disposée sur le couvercle (40) formant un passage gazeux entre le second espace (S2) et un extérieur du module de batterie (100).

9. Module de batterie selon la revendication 7 ou 8, dans lequel
le couvercle (40) est formé d'une matière plastique, d'un métal, ou d'une matière plastique renforcée de fibres.

10. Module de batterie selon l'une quelconque des revendications 7 à 9, dans lequel un rapport entre le volume du premier espace (S1) et un volume du fluide de régulation thermique intégré dans le boîtier (10), à une température de référence, est dans la plage de 0 % à 10 %.

11. Module de batterie selon l'une quelconque des revendications 7 à 10, comprenant en outre
une pluralité de broches (13) agencées sur la surface extérieure (12) du boîtier (10), dans lequel
une pluralité de trous (33) sont disposés sur la plaque flexible (30) à des positions correspondant à des positions de la pluralité de broches (13), et
la plaque flexible (30) est positionnée avec les broches (13) faisant saillie à travers les trous (33) de la plaque flexible (30).

12. Module de batterie selon la revendication 11, dans lequel
une pluralité de trous (42) sont disposés sur le couvercle (40) à des positions correspondant aux positions de la pluralité de broches (13), et
le couvercle (40) est positionné avec les broches (13) faisant saillie à travers les trous (33) de la plaque flexible (30) et les trous (42) du couvercle (40).

13. Module de batterie selon l'une quelconque des revendications 7 à 12, comprenant en outre
au moins une première nervure de serrage (14) agencée sur la surface extérieure (12) du boîtier (10) ;
au moins une seconde nervure de serrage (43) agencée sur le couvercle (40), dans lequel
la plaque flexible (30) est agencée entre le boîtier (10) et le couvercle (40), formant ainsi, par les premières nervures de serrage (14) et les secondes nervures de serrage (43), un joint étanche aux liquides pour le boîtier (10) et le premier espace (S1) vis-à-vis de l'extérieur du module de batterie.

14. Module de batterie selon l'une quelconque des revendications 7 à 13, dans lequel le couvercle (40) et la plaque flexible (30) sont fixés au boîtier (10) par une pluralité de vis (50) et des trous de vis respectifs (15) disposés sur le boîtier (10).

15. Module de batterie selon l'une quelconque des revendications 1 à 14, dans lequel le boîtier (10) comprend un premier passage de liquide (16) et un second passage de liquide (17), pour une connexion avec un système de régulation thermique faisant circuler le fluide de régulation thermique à travers le module de batterie.
